# EUROPEAN PATENT SPECIFICATION

(11) **EP 3 191 973 B1**
(45) Date of publication and mention of the grant of the patent: **23.10.2019**
(21) Application number: 15839957.6
(22) Date of filing: 06.08.2015
(51) Int. Cl.: G06F 15/173, G06F 15/16, G06F 9/54, H04L 29/08

(54) **TECHNOLOGIES FOR PROXY-BASED MULTI-THREADED MESSAGE PASSING COMMUNICATION**
TECHNOLOGIEN FÜR PROXY-BASIERTE MULTI-THREAD-NACHRICHTENÜBERTRAGUNGSKOMMUNIKATION
TECHNOLOGIES POUR COMMUNICATION DE PASSAGE DE MESSAGES MULTIFIL À BASE DE MANDATAIRE

(30) Priority: 09.09.2014 US 201414481686
(43) Date of publication of application: 19.07.2017
(73) Proprietor: Intel Corporation, Santa Clara, CA 95054 (US)
(72) Inventor: DINAN, James, Hudson, Massachusetts 01749 (US); SRIDHARAN, Srinivas, Bangalore 560008 (IN)
(74) Representative: Rummler, Felix
(86) International application number: PCT/US2015/043936
(87) International publication number: WO 2016/039897

(56) References cited:
- WO-A2-2012/139067
- US-A1- 2007 067 606
- US-A1- 2010 058 356
- US-A1- 2011 197 209
- JAMES DINAN ET AL: "Enabling MPI interoperability through flexible communication endpoints", PROCEEDINGS OF THE 20TH EUROPEAN MPI USERS' GROUP MEETING ON, EUROMPI '13, 1 January 2013 (2013-01-01), page 13, XP055462398, New York, New York, USA DOI: 10.1145/2488551.2488553 ISBN: 978-1-4503-1903-4
- VAIDYANATHAN KARTHIKEYAN ET AL: "Improving Communication Performance and Scalability of Native Applications on Intel Xeon Phi Coprocessor Clusters", 2014 IEEE 28TH INTERNATIONAL PARALLEL AND DISTRIBUTED PROCESSING SYMPOSIUM, IEEE, 19 May 2014 (2014-05-19), pages 1083-1092, XP032628916, ISSN: 1530-2075, DOI: 10.1109/IPDPS.2014.113 [retrieved on 2014-08-13]
- GABRIEL EDGAR ET AL.: 'Open MPI: Goals, Concept, and Design of a Next Generation MPI Implementation', vol. 3241, BERLIN HEIDELBERG, ISBN 978-3-540-302 deel 'Open MPI: Goals, Concept, and Design of a Next Generation MPI Implementation', pages 97 - 104, XP055417190

## Description

### BACKGROUND

High-performance computing (HPC) applications typically execute calculations on computing clusters that include many individual computing nodes connected by a highspeed network fabric. Typical computing clusters may include hundreds or thousands of individual nodes. Each node may include several processors, processor cores, or other parallel computing resources. A typical computing job therefore may be executed by a large number of individual processes distributed across each computing node and across the entire computing cluster.

Processes within a job may communicate data with each other using a message-passing communication paradigm. In particular, many HPC applications may use a message passing interface (MPI) library to perform message-passing operations such as sending or receiving messages. MPI is a popular message passing library maintained by the MPI Forum, and has been implemented for numerous computing languages, operation systems, and HPC computing platforms. In use, each process is given an MPI rank, typically an integer, that is used to identify the process in MPI execution. The MPI rank is similar to a network address and may be used by the processes to send and receive messages. MPI supports operations including two-sided send and receive operations, collective operations such as reductions and barriers, and one-sided communication operations such as get and put.

Many HPC applications are increasingly performing calculations using a shared-memory multiprocessing model. For example, HPC applications may use a shared memory multiprocessing application programming interface (API) such as OpenMP. As a result, many current HPC application processes are multi-threaded. Increasing the number of processor
cores or threads per HPC process may improve node resource utilization and thereby increase computation performance. Many system MPI implementations are thread-safe or may otherwise be executed in multithreaded mode. However, performing multiple MPI operations concurrently may reduce overall performance through increased overhead. For example, typical MPI implementations assign a single MPI rank to each process regardless of the number of threads executing within the process. Multithreaded MPI implementations may also introduce other threading overhead, for example overhead associated with thread synchronization and shared communication state. In some implementations, to avoid threading overhead, multithreaded applications may funnel all MPI communications to a single thread; however, that single thread may not be capable of fully utilizing available networking resources.
"Enabling MPI Interoperability Through Flexible Communication Endpoints" by James Dinan et al. (ISBN:978-4503-1903-4; DOI:10.1145/2488551.2488553), relates to a MPI extension that enables a programmer to generate additional ranks at each process. "Improving Communication Performance and Scalability of Native Applications on Intel® Xeon Phi™ Coprocessor Clusters" by Karthikeyan Vaidyanathan et al. (ISSN:1530-2075; DOI:10.1109/IPDPS.2014.113), relates to method for avoiding serialization and maximizing parallelism during application communication phases.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a system for proxy-based multithreaded message passing;
FIG. 2 is a chart illustrating sample results that may be achieved in one embodiment of the system of FIG. 1;
FIG. 3 is a simplified block diagram of at least one embodiment of an environment that may be established by a computing node of FIG. 1;
FIG. 4 is a simplified block diagram of at least one embodiment of an application programming interface (API) stack that may be established by the computing node of FIGS. 1 and 3; and
FIG. 5 is a simplified flow diagram of at least one embodiment of a method for proxy-based multithreaded message passing that may be executed by a computing node of FIGS. 1 and 3.

### DETAILED DESCRIPTION OF THE DRAWINGS

While the concepts of the present disclosure are susceptible to various modifications and alternative forms, specific embodiments thereof have been shown by way of
example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one of A, B, and C" can mean (A); (B); (C): (A and B); (A and C); (B and C); or (A, B, and C). Similarly, items listed in the form of "at least one of A, B, or C" can mean (A); (B); (C): (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

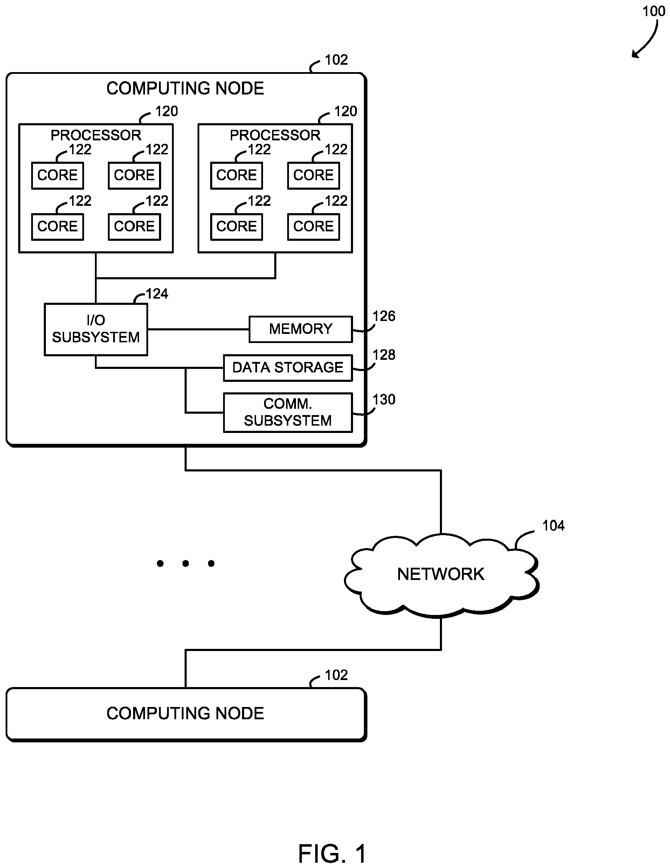

Referring now to FIG. 1, in an illustrative embodiment, a system 100 for proxy-based multithreaded message passing includes a number of computing nodes 102 in communication over a network 104. In use, as discussed in more detail below, each computing node 102 may execute one or more multithreaded processes. Each thread of a host process may generate message passing interface (MPI) operations such as sending or receiving a message. Those MPI operations may be intercepted by a lightweight proxy library within the host process, which forwards each MPI operation to a proxy process that is independent of the host process. Each proxy process uses an instance of a system MPI library to perform the MPI operation. By performing the MPI operations in a proxy process, threading-related overhead may be reduced or avoided. For example, the MPI library in each proxy process may execute in single-threaded mode and avoid unnecessary thread synchronization, shared communication state, or other negative interference with other threads. Additionally or alternatively, performing MPI operations in a proxy process may avoid locking overhead used by low-level networking interfaces for guaranteeing thread-safe access. In some embodiments, each proxy process may be assigned dedicated networking resources, which may improve network resource utilization. In some embodiments, the proxy processes may poll for completion on outstanding requests or otherwise provide asynchronous progress for the host process. Further, by using a thin proxy library to intercept MPI operations, the system 100 may reuse the existing system MPI library and/or existing application code without extensive changes.

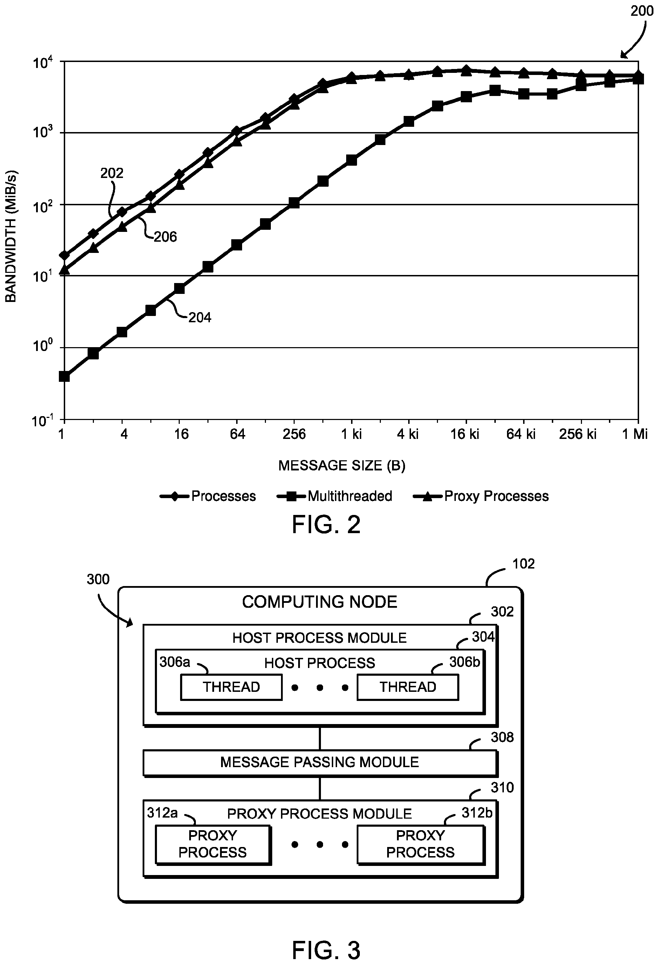

Referring now to FIG. 2, a chart 200 shows illustrative results that may be achieved using the system 100. The chart 200 illustrates results of a bandwidth benchmark executed for several message sizes. The horizontal axis plots the message size in bytes (B), and the vertical axis illustrates the uni-directional network bandwidth achieved at a given node in binary megabytes per second (MiB/s). The curve 202 illustrates bandwidth achieved using eight independent processes per node. The curve 202, using independent processes, may illustrate the upper bound achievable by the bandwidth benchmark. As shown, the total bandwidth achieved increases as the message size increases, until the total available network bandwidth is saturated. The curve 204 illustrates bandwidth achieved using eight threads in a single process per node. As shown, for each message size, the bandwidth achieved using threads is much lower than with independent processes, and the multithreaded benchmark requires much larger messages to saturate available bandwidth. The curve 206 illustrates bandwidth achieved using eight threads and eight proxy processes per node, embodying some of the technologies disclosed herein. As shown, bandwidth achieved using proxy processes may be much higher than using multiple threads and may be close to the best-case bandwidth achievable using independent processes.

Referring back to FIG. 1, each computing node 102 may be embodied as any type of computation or computer device capable of performing the functions described herein, including, without limitation, a computer, a multiprocessor system, a server, a rack-mounted server, a blade server, a laptop computer, a notebook computer, a network appliance, a web appliance, a distributed computing system, a processor-based system, and/or a consumer electronic device. As shown in FIG. 1, each computing node 102 illustratively includes two processors 120, an input/output subsystem 124, a memory 126, a data storage device 128, and a communication subsystem 130. Of course, the computing node 102 may include other or additional components, such as those commonly found in a server device (e.g., various input/output devices), in other embodiments. Additionally, in some embodiments, one or more of the illustrative components may be incorporated in, or otherwise form a portion of, another component. For example, the memory 126, or portions thereof, may be incorporated in one or more processor 120 in some embodiments.

Each processor 120 may be embodied as any type of processor capable of performing the functions described herein. Each illustrative processor 120 is a multi-core processor, however in other embodiments each processor 120 may be embodied as a single or multi-core processor(s), digital signal processor, microcontroller, or other processor or processing/controlling circuit. Each processor 120 illustratively includes four processor cores 122, each of which is an independent processing unit capable of executing programmed instructions. In some embodiments, each of the processor cores 122 may be capable of hyperthreading; that is, each processor core 122 may support execution on two or more logical processors or hardware threads. Although each of the illustrative computing nodes 102 includes two processors 120 having four processor cores 122 in the embodiment of FIG. 1; each computing node 102 may include one, two, or more processors 120 having one, two, or more processor cores 122 each in other embodiments. In particular, the technologies disclosed herein are also applicable to uniprocessor or single-core computing nodes 102.

The memory 126 may be embodied as any type of volatile or non-volatile memory or data storage capable of performing the functions described herein. In operation, the memory 126 may store various data and software used during operation of the computing node 102 such as operating systems, applications, programs, libraries, and drivers. The memory 126 is communicatively coupled to the processor 120 via the I/O subsystem 124, which may be embodied as circuitry and/or components to facilitate input/output operations with the processor 120, the memory 126, and other components of the computing node 102. For example, the I/O subsystem 124 may be embodied as, or otherwise include, memory controller hubs, input/output control hubs, firmware devices, communication links (i.e., point-to-point links, bus links, wires, cables, light guides, printed circuit board traces, etc.) and/or other components and subsystems to facilitate the input/output operations. In some embodiments, the I/O subsystem 124 may form a portion of a system-on-a-chip (SoC) and be incorporated, along with the processors 120, the memory 126, and other components of the computing node 102, on a single integrated circuit chip. The data storage device 128 may be embodied as any type of device or devices configured for short-term or long-term storage of data such as, for example, memory devices and circuits, memory cards, hard disk drives, solid-state drives, or other data storage devices.

The communication subsystem 130 of the computing node 102 may be embodied as any communication circuit, device, or collection thereof, capable of enabling communications between the computing nodes 102 and/or other remote devices over the network 104. The communication subsystem 130 may be configured to use any one or more communication technology (e.g., wired or wireless communications) and associated protocols (e.g., InfiniBand®, Ethernet, Bluetooth®, Wi-Fi®, WiMAX, etc.) to effect such communication. The communication subsystem 130 may include one or more network adapters and/or network ports that may be used concurrently to transfer data over the network 104.

As discussed in more detail below, the computing nodes 102 may be configured to transmit and receive data with each other and/or other devices of the system 100 over the network 104. The network 104 may be embodied as any number of various wired and/or wireless networks. For example, the network 104 may be embodied as, or otherwise include, a switched fabric network, a wired or wireless local area network (LAN), a wired or wireless wide area network (WAN), a cellular network, and/or a publicly-accessible, global network such as the Internet. As such, the network 104 may include any number of additional devices, such as additional computers, routers, and switches, to facilitate communications among the devices of the system 100.

Referring now to FIG. 3, in an illustrative embodiment, each computing node 102 establishes an environment 300 during operation. The illustrative environment 300 includes a host process module 302, a message passing module 308, and a proxy process module 310. The various modules of the environment 300 may be embodied as hardware, firmware, software, or a combination thereof. For example, each of the modules, logic, and other components of the environment 300 may form a portion of, or otherwise be established by, the processors 120 or other hardware components of the computing node 102.

The host process module 302 is configured to manage relationships between processes and threads executed by the computing node 102. As shown, the host process module 302 includes a host process 304, and the host process 304 may establish a number of threads 306. The illustrative host process 304 establishes two threads 306a, 306b, but it should be understood that numerous threads 306 may be established. For example, in some embodiments, the host process 304 may establish one thread 306 for each hardware thread supported by the computing node 102 (e.g., sixteen threads 306 in the illustrative embodiment). The host process 304 may be embodied as an operating system process, managed executable process, application, job, or other program executed by the computing node 102. Each of the threads 306 may be embodied as an operating system thread, managed executable thread, application thread, worker thread, lightweight thread, or other program executed within the process space of the host process 304. Each of the threads 306 may share the memory space of the host process 304.

The host process module 302 is further configured to create message passing interface (MPI) endpoints for each of the threads 306 and to assign each of the threads 306 to a proxy process 312 (described further below). The MPI endpoints may be embodied as any MPI rank, network address, or identifier that may be used to route messages to particular threads 306 executing within the host process 304. The MPI endpoints may not distinguish among threads 306 that are executing within a different host process 304; for example, the MPI endpoints may be embodied as local MPI ranks within the global MPI rank of the host process 304.

The message passing module 308 is configured to receive MPI operations addressed to the MPI endpoints of the threads 306 and communicate those MPI operations to the associated proxy process 312. MPI operations may include any message passing operation, such as sending messages, receiving messages, collective operations, or one-sided operations. The message passing module 308 may communicate the MPI operations using any available intra-node communication technique, such as shared-memory communication.

The proxy process module 310 is configured to perform the MPI operations forwarded by the message passing module 308 using a number of proxy processes 312. Similar to the host process 304, each of the proxy processes 312 may be embodied as an operating system process, managed executable process, application, job, or other program executed by the computing node 102. Each of the proxy processes 312 establishes an execution environment, address space, and other resources that are independent of other proxy processes 312 of the computing node 102. As described above, each of the proxy processes 312 may be assigned to one of the threads 306. The illustrative proxy process module 310 establishes two proxy processes 312a, 312b, but it should be understood that numerous proxy processes 312 may be established. Although illustrated as including one proxy process 312 for each thread 306, it should be understood that in some embodiments one proxy process 312 may be shared by several threads 306, host processes 304, or other jobs, and that a thread 306 may interact with several proxy processes 312.

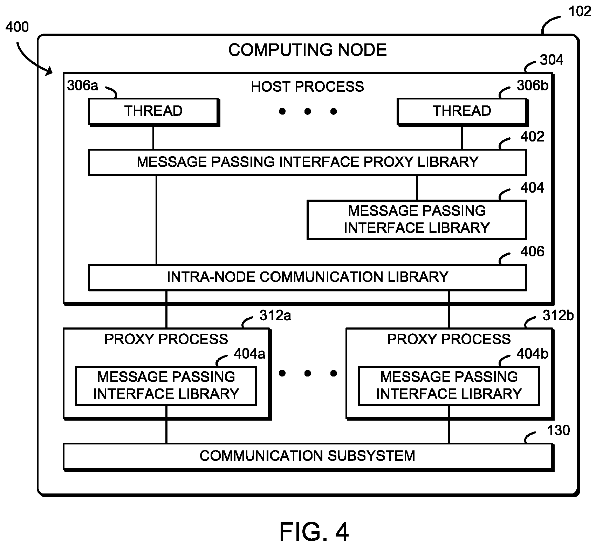

Referring now to FIG. 4, in an illustrative embodiment, the computing node 102 may establish an application programming interface (API) stack 400 during operation. The illustrative API stack 400 includes a message passing interface (MPI) proxy library 402, an MPI library 404, and an intra-node communication library 406. The various libraries of the API stack 400 may be embodied as hardware, firmware, software, or a combination thereof.

In the illustrative API stack 400, the host process 304 establishes instances of the MPI proxy library 402, the MPI library 404, and the intra-node communication library 406 that are shared by all of the threads 306. For example, each of the libraries 402, 404, 406 may be loaded into the address space of the host process 304 using an operating system dynamic loader or dynamic linker. Each of the threads 306 interfaces with the MPI proxy library 402. The MPI proxy library 402 may implement the same programmatic interface as the MPI library 404. Thus, the threads 306 may submit ordinary MPI operations (e.g., send operations, receive operations, collective operations, or one-sided communication operations) to the MPI proxy library 402. The MPI proxy library 402 may pass-through many MPI operations directly to the MPI library 404. The MPI library 404 may be embodied as a shared instance of a system MPI library 404. In some embodiments, the MPI library 404 of the host process 304 may be configured to execute in thread-safe mode. Additionally, although the proxy processes 312 are illustrated as external to the MPI library 404, in some embodiments the MPI library 404 may create or otherwise manage the proxy processes 312 internally. Additionally or alternatively, in some embodiments the proxy processes 312 may be created externally as a system-managed resource.

The MPI proxy library 402 may intercept and redirect some MPI operations to the intra-node communication library 406. For example, the MPI proxy library 402 may implement an MPI endpoints extension interface that allows distinct MPI endpoints to be established for each of the threads 306. Message operations directed toward those MPI endpoints may be redirected to the intra-node communication library 406. The intra-node communication library 406 communicates with the proxy processes 312, and may use any form of efficient intra-node communication, such as shared-memory communication.

Each of the proxy processes 312 establishes an instance of the MPI library 404. For example, the proxy process 312a establishes the MPI library 404a, the proxy process 312b establishes the MPI library 404b, and so on. The MPI library 404 established by each proxy process 312 may be the same system MPI library 404 established by the host process 304. In some embodiments, the MPI library 404 of each proxy process 312 may be configured to execute in single-threaded mode. Each MPI library 404 of the proxy processes 312 uses the communication subsystem 130 to communicate with remote computing nodes 102. In some embodiments, concurrent access to the communication subsystem 130 by multiple proxy processes 312 may be managed by an operating system, virtual machine monitor (VMM), hypervisor, or other control structure of the computing node 102 (not shown). Additionally or alternatively, in some embodiments one or more of the proxy processes 312 may be assigned isolated, reserved, or otherwise dedicated network resources of the communication subsystem 130, such as dedicated network adapters, network ports, or network bandwidth. Although illustrated as establishing an instance of the MPI library 404, in other embodiments each proxy process 312 may use any other communication library or other method to perform MPI operations. For example, each proxy process 312 may establish a low-level network API other than the MPI library 404.

Although the MPI proxy library 402 and the MPI library 404 are illustrated as implementing the MPI as established by the MPI Forum, it should be understood that in other embodiments the API stack 400 may include any middleware library for interprocess and/or internode communication in high-performance computing applications. Additionally, in some embodiments the threads 306 may interact with a communication library that implements a different interface from the underlying communication library. For example, rather than a proxy library, the threads 306 may interact with an adapter library that forwards calls to the proxy processes 312 and/or to the MPI library 404.

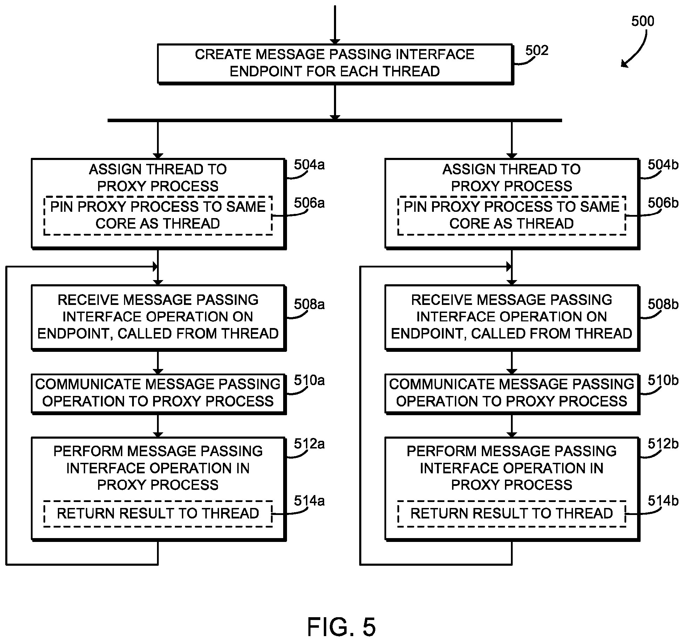

Referring now to FIG. 5, in use, each computing node 102 may execute a method 500 for proxy-based multithreaded message passing. The method 500 may be initially executed, for example, by the host process 304 of a computing node 102. The method 500 begins with block 502, in which the computing node 102 creates a message passing interface (MPI) endpoint for each thread 306 created by the host process 304. As described above, the computing node 102 may create several threads 306 to perform computational processing, and the number of threads 306 created may depend on characteristics of the computing node 102, the processing workload, or other factors. Each MPI endpoint may be embodied as an MPI rank, network address, or other identifier that may be used to address messages to the associated thread 306 within the host process 304. For example, each of the threads 306 may have a unique local MPI rank nested within the MPI rank of the host process 304. The computing node 102 may create the MPI endpoints by calling an MPI endpoint extension interface, for example as implemented by the MPI proxy library 402 described above in connection with FIG. 4. After creating the MPI endpoints, execution of the method 500 proceeds in parallel to blocks 504, using some or all of the threads 306. For example, as shown in FIG. 5, the method 500 may proceed in parallel to the block 504a using the thread 306a, to the block 504b using the thread 306b, and so on. Additionally, although illustrated including the two threads 306a, 306b, it should be understood that the method 500 may be executed in parallel for many threads 306.

In block 504a, the computing node 102 assigns the thread 306a to a proxy process 312a. As part of assigning the thread 306a to the proxy process 312a, the computing node 102 may initialize an intra-node communication link between the thread 306a and the proxy process 312a. The computing node 102 may also perform any other initialization required to support MPI communication using the proxy process 312a, for example, initializing a global MPI rank for the proxy process 312a. In some embodiments, in block 506a, the computing node 102 may pin the proxy process 312a and the thread 306a to execute on the same processor core 122. Executing on the same processor core 122 may improve intra-node communication performance, for example by allowing data transfer using a shared cache memory. The computing node 102 may use any technique for pinning the proxy process 312a and/or the thread 306a, including assigning the proxy process 312a and the thread 306a to hardware threads executed by the same processor core 122, setting operating system processor affinity, or other techniques. Additionally, although illustrated as assigning the threads 306 to the proxy processes 312 in parallel, it should be understood that in some embodiments the threads 306 may be assigned to the proxy processes 312 in a serial or single-threaded manner, for example by the host process 304.

In block 508a, the computing node 102 receives an MPI operation called by the thread 306a on the associated MPI endpoint. The MPI operation may be embodied as any message passing command, including a send, a receive, a ready-send (i.e., only send when the recipient endpoint is ready), a collective operation, a one-sided communication operation, or other command. As shown in FIG. 4, in some embodiments, the thread 306a may call an MPI operation provided by or compatible with the interface of the system MPI library 404 of the computing node 102. That MPI operation may be intercepted by the MPI proxy library 402.

In block 510a, the computing node 102 communicates the MPI operation from the thread 306a to the proxy process 312a. The computing node 102 may use any technique for intra-node data transfer. To improve performance, the computing node 102 may use an efficient or high-performance technique to avoid unnecessary copies of data in the memory 126. For example, the computing node 102 may communicate the MPI operation using a shared memory region of the memory 126 that is accessible to both the thread 306a and the proxy process 312a. In some embodiments, the thread 306a and the proxy process 312a may communicate using a lock-free command queue stored in the shared memory region. In some embodiments, the computing node 102 may allow the thread 306a and/or the proxy process 312a to allocate data buffers within the shared memory region, which may further reduce data copies. As illustrated in FIG. 4, in some embodiments, the MPI operation intercepted by the MPI proxy interface 402 may be passed to the intra-node communication library 406, which in turn may communicate the MPI operation to the appropriate proxy process 312.

In block 512a, the computing node 102 performs the MPI operation using the proxy process 312a. As illustrated in FIG. 4, the proxy process 312a may perform the requested MPI operation using an instance of the system MPI library 404a that is established by the proxy process 312a. The MPI library 404a thus may execute in single-threaded mode or otherwise avoid negative interference that may reduce performance of the MPI library 404a. The MPI library 404a performs the MPI operation using the communication subsystem 130. Additionally or alternatively, the computing node 102 may perform the MPI operation using any other communication method, such as a low-level network API. Access by the MPI library 404a or other communication method to the communication subsystem 130 may be managed, mediated, or otherwise controlled by an operating system, virtual machine monitor (VMM), hypervisor, or other control structure of the computing node 102. In some embodiments, the operating system, VMM, hypervisor, or other control structure may efficiently manage concurrent access to the communication subsystem 130 by several proxy processes 312. Additionally or alternatively, in some embodiments, the proxy process 312a may be partitioned or otherwise assigned dedicated networking resources such as a dedicated network adapter, dedicated network port, dedicated amount of network bandwidth, or other networking resource. In some embodiments, in block 514a, the computing node 102 may return the result of the MPI operation to the thread 306a. The computing node 102 may return results using the same or similar intra-node communication link used to communicate the MPI operation to the proxy process 312a, for example, using the shared memory region. After performing the MPI operation, the method 500 loops back to block 508a to continue processing MPI operations.

Referring back to block 502, as described above, execution of the method 500 proceeds in parallel to blocks 504a, 504b. The blocks 504b, 508b, 510b, 512b correspond to the blocks 504a, 508a, 510a, 512a, respectively, but are executed by the computing node 102 using the thread 306b and the proxy process 312b rather than the thread 306a and the proxy process 312a. In other embodiments, the method 500 may similarly execute blocks 504, 508, 510, 512 in parallel for many threads 306 and proxy processes 312. The computing node 102 may perform numerous MPI operations in parallel, originating from many threads 306 and performed by many proxy processes 312.

## Claims

1. A computing device for multi-threaded message passing, the computing device comprising:
a host process module (302) adapted to (i) create a first message passing interface endpoint for a first thread (306a) of a plurality of threads (306) established by a host process (304) of the computing device and (ii) assign the first thread (306a) to a first proxy process (312a), wherein the host process (304) includes a message passing interface library (404);
a message passing module (308) adapted to (i) receive, during execution of the first thread, a first message passing interface operation associated with the first message passing interface endpoint and (ii) communicate the first message passing interface operation from the first thread (306a) to the first proxy process(312a); and
a proxy process module (310) adapted to:
establish, by the first proxy process (312a), a first instance of the message passing interface library (404a) configured to execute in a single-threaded mode of execution;
use the first instance of the message passing interface library (404a) established by the first proxy process to perform the first message passing interface operation by the first proxy process.

2. The computing device of claim 1, wherein the proxy process module (310) is adapted to communicate by the first proxy process with a remote computing device using a communication subsystem of the computing device when performing the first message passing interface operation, wherein the proxy process module being adapted to communicate using the communication subsystem of the computing device comprises said proxy process module being adapted to communicate using network resources of the communication subsystem, wherein the network resources are dedicated to the first proxy process.

3. The computing device of claim 1, wherein the host process module being adapted to assign the first thread to the first proxy process comprises said host process module being adapted to pin the first thread and the first proxy process to a processor core of the computing device.

4. The computing device of claim 1, wherein the message passing module being adapted to communicate the first message passing interface operation from the first thread to the first proxy process comprises said message passing module being adapted to communicate the first message passing interface operation using a shared memory region of the computing device.

5. The computing device of claim 1, wherein the message passing module being adapted to receive the first message passing interface operation comprises said message passing module being adapted to intercept the first message passing interface operation targeted for a shared instance of the message passing interface library established by the host process.

6. A method for multi-threaded message passing, the method comprising:
creating (502), by a computing device, a first message passing interface endpoint for a first thread (306a) of a plurality of threads (306) established by a host process (304) of the computing device, wherein the host process (304) includes a message passing interface library (404);
assigning (504a, 504b), by the computing device, the first thread to a first proxy process (312a);
receiving (508a, 508b), by the computing device while executing the first thread (306a), a first message passing interface operation associated with the first message passing interface endpoint;
communicating (510a, 510b), by the computing device, the first message passing interface operation from the first thread (306a) to the first proxy process (312a);
establishing, by the first proxy process (312a), a first instance of the message passing interface library (404a) configured to execute in a single-threaded mode of execution; and
using the first instance of the message passing interface library (404a) established by the first proxy process to perform (512a, 512b), by the computing device, the first message passing interface operation by the first proxy process.

7. The method of claim 6, wherein performing the first message passing interface operation by the first proxy process comprises communicating from the first proxy process to a remote computing device using a communication subsystem of the computing device, wherein communicating using the communication subsystem of the computing device comprises communicating using network resources of the communication subsystem, wherein the network resources are dedicated to the first proxy process.

8. The method of claim 6, wherein assigning the first thread to the first proxy process comprises pinning the first thread and the first proxy process to a processor core of the computing device.

9. The method of claim 6, wherein communicating the first message passing interface operation from the first thread to the first proxy process comprises communicating the first message passing interface operation using a shared memory region of the computing device.

10. The method of claim 6, wherein performing the first message passing interface operation comprises performing the first message passing interface operation by the first proxy process using a first instance of a message passing interface library established by the first proxy process.

11. The method of claim 10, wherein performing the first message passing interface operation by the first proxy process comprises performing the first message passing interface operation by the first proxy process using the first instance of the message passing interface library established in a single-threaded mode of execution.

12. The method of claim 10, wherein receiving the first message passing interface operation comprises intercepting the first message passing interface operation targeted for a shared instance of the message passing interface library established by the host process.

13. One or more machine readable storage media comprising a plurality of instructions stored thereon that in response to being executed result in a computing device performing the method of any of claims 6-12.

## Patentansprüche

1. Rechenvorrichtung zur Multithread-Nachrichtenübertragung, die Rechenvorrichtung umfassend:
ein Hostprozessmodul (302), das geeignet ist, (i) einen ersten Nachrichtenübertragungsschnittstellen-Endpunkt für einen ersten Thread (306a) einer Mehrzahl von Threads (306) zu erstellen, die von einem Hostprozess (304) der Rechenvorrichtung hergestellt werden, und (ii) den ersten Thread (306a) einem ersten Proxyprozess (312a) zuzuordnen, wobei der Hostprozess (304) eine Nachrichtenübertragungsschnittstellen-Bibliothek (404) aufweist;
ein Nachrichtenübertragungsmodul (308), das geeignet ist, (i) während der Ausführung des ersten Threads eine erste Nachrichtenübertragungsschnittstellen-Operation zu empfangen, die mit dem ersten Nachrichtenübertragungsschnittstellen-Endpunkt in Verbindung steht, und (ii) die erste Nachrichtenübertragungsschnittstellen-Operation von dem ersten Thread (306a) an den ersten Proxyprozess (312a) zu kommunizieren; und
ein Proxyprozessmodul (310), das geeignet ist:
durch den ersten Proxyprozess (312a) eine erste Instanz der Nachrichtenübertragungsschnittstellen-Bibliothek (404a) herzustellen, die dazu ausgebildet ist, in einem Single-Thread-Ausführungsmodus ausgeführt zu werden;
die erste Instanz der Nachrichtenübertragungsschnittstellen-Bibliothek (404a), die von dem ersten Proxyprozess hergestellt wurde, dafür zu nutzen, die erste Nachrichtenübertragungsschnittstellen-Operation durch den ersten Proxyprozess durchzuführen.

2. Rechenvorrichtung nach Anspruch 1, wobei das Proxyprozessmodul (310) geeignet ist, durch den ersten Proxyprozess mit einer entfernten Rechenvorrichtung mithilfe eines Kommunikations-Subsystems der Rechenvorrichtung zu kommunizieren, wenn die erste Nachrichtenübertragungsschnittstellen-Operation durchgeführt wird, wobei das Proxyprozessmodul, das geeignet ist, mithilfe des Kommunikations-Subsystems der Rechenvorrichtung zu kommunizieren, das Proxyprozessmodul umfasst, das geeignet ist, mithilfe von Netzwerkressourcen des Kommunikations-Subsystems zu kommunizieren, wobei die Netzwerkressourcen für den ersten Proxyprozess dediziert sind.

3. Rechenvorrichtung nach Anspruch 1, wobei das Hostprozessmodul, das geeignet ist, den ersten Thread dem ersten Proxyprozess zuzuordnen, das Hostprozessmodul umfasst, das geeignet ist, den ersten Thread und den ersten Proxyprozess an einen Prozessorkern der Rechenvorrichtung anzuheften.

4. Rechenvorrichtung nach Anspruch 1, wobei das Nachrichtenübertragungsmodul, das geeignet ist, die erste Nachrichtenübertragungsschnittstellen-Operation von dem ersten Thread an den ersten Proxyprozess zu kommunizieren, das Nachrichtenübertragungsmodul umfasst, das geeignet ist, die erste Nachrichtenübertragungsschnittstellen-Operation mithilfe eines gemeinsam genutzten Speicherbereichs der Rechenvorrichtung zu kommunizieren.

5. Rechenvorrichtung nach Anspruch 1, wobei das Nachrichtenübertragungsmodul, das geeignet ist, die erste Nachrichtenübertragungsschnittstellen-Operation zu empfangen, das Nachrichtenübertragungsmodul umfasst, das geeignet ist, die erste Nachrichtenübertragungsschnittstellen-Operation abzufangen, die für eine gemeinsam genutzte Instanz der Nachrichtenübertragungsschnittstellen-Bibliothek bestimmt ist, die von dem Hostprozess hergestellt wurde.

6. Verfahren zur Multithread-Nachrichtenübertragung, das Verfahren umfassend:
Erstellen (502), durch eine Rechenvorrichtung, eines ersten Nachrichtenübertragungsschnittstellen-Endpunkts für einen ersten Thread (306a) einer Mehrzahl von Threads (306), die von einem Hostprozess (304) der Rechenvorrichtung hergestellt werden, wobei der Hostprozess (304) eine Nachrichtenübertragungsschnittstellen-Bibliothek (404) aufweist;
Zuordnen (504a, 504b) des ersten Threads einem ersten Proxyprozess (312a) durch die Rechenvorrichtung;
Empfangen (508a, 508b), durch die Rechenvorrichtung während der Ausführung des ersten Threads (306a), einer ersten Nachrichtenübertragungsschnittstellen-Operation, die mit dem ersten Nachrichtenübertragungsschnittstellen-Endpunkt in Verbindung steht;
Kommunizieren (510a, 510b), durch die Rechenvorrichtung, der ersten Nachrichtenübertragungsschnittstellen-Operation von dem ersten Thread (306a) an den ersten Proxyprozess (312a);
Herstellen, durch den ersten Proxyprozess (312a), einer ersten Instanz der Nachrichtenübertragungsschnittstellen-Bibliothek (404a), die dazu ausgebildet ist, in einem Single-Thread-Ausführungsmodus ausgeführt zu werden; und
Nutzen der ersten Instanz der Nachrichtenübertragungsschnittstellen-Bibliothek (404a), die von dem ersten Proxyprozess hergestellt wurde, um durch die Rechenvorrichtung die erste Nachrichtenübertragungsschnittstellen-Operation durch den ersten Proxyprozess durchzuführen (512a, 512b).

7. Verfahren nach Anspruch 6, wobei Durchführen der ersten Nachrichtenübertragungsschnittstellen-Operation durch den ersten Proxyprozess Kommunizieren von dem ersten Proxyprozess an eine entfernte Rechenvorrichtung mithilfe eines Kommunikations-Subsystems der Rechenvorrichtung umfasst, wobei Kommunizieren mithilfe des Kommunikations-Subsystems der Rechenvorrichtung Kommunizieren mithilfe von Netzwerkressourcen des Kommunikations-Subsystems umfasst, wobei die Netzwerkressourcen für den ersten Proxyprozess dediziert sind.

8. Verfahren nach Anspruch 6, wobei Zuordnen des ersten Threads dem ersten Proxyprozess Anheften des ersten Threads und des ersten Proxyprozesses an einen Prozessorkern der Rechenvorrichtung umfasst.

9. Verfahren nach Anspruch 6, wobei Kommunizieren der ersten Nachrichtenübertragungsschnittstellen-Operation von dem ersten Thread an den ersten Proxyprozess Kommunizieren der ersten Nachrichtenübertragungsschnittstellen-Operation mithilfe eines gemeinsam genutzten Speicherbereichs der Rechenvorrichtung umfasst.

10. Verfahren nach Anspruch 6, wobei Durchführen der ersten Nachrichtenübertragungsschnittstellen-Operation Durchführen der ersten Nachrichtenübertragungsschnittstellen-Operation durch den ersten Proxyprozess mithilfe einer ersten Instanz einer Nachrichtenübertragungsschnittstellen-Bibliothek umfasst, die durch den ersten Proxyprozess hergestellt wurde.

11. Verfahren nach Anspruch 10, wobei Durchführen der ersten Nachrichtenübertragungsschnittstellen-Operation durch den ersten Proxyprozess Durchführen der ersten Nachrichtenübertragungsschnittstellen-Operation durch den ersten Proxyprozess mithilfe der ersten Instanz der Nachrichtenübertragungsschnittstellen-Bibliothek umfasst, die in einem Single-Thread-Ausführungsmodus hergestellt wurde.

12. Verfahren nach Anspruch 10, wobei Empfangen der ersten Nachrichtenübertragungsschnittstellen-Operation Abfangen der ersten Nachrichtenübertragungsschnittstellen-Operation umfasst, die für eine gemeinsam genutzte Instanz der Nachrichtenübertragungsschnittstellen-Bibliothek bestimmt ist, die durch den Hostprozess hergestellt wurde.

13. Ein oder mehrere maschinenlesbare Speichermedien, die eine Mehrzahl von darauf gespeicherten Anweisungen umfassen, die in Reaktion auf ihre Ausführung zur Folge haben, dass eine Rechenvorrichtung das Verfahren nach einem der Ansprüche 6 bis 12 durchführt.

## Revendications

1. Dispositif informatique pour passage de message multifil, le dispositif informatique comprenant :
un module de processus hôte (302) adapté pour (i) créer un premier point d'extrémité d'interface de passage de message pour un premier fil d'exécution (306a) d'une pluralité de fils d'exécution (306) établis par un processus hôte (304) du dispositif informatique et (ii) affecter le premier fil d'exécution (306a) à un premier processus mandataire (312a), où le processus hôte (304) comprend une bibliothèque d'interfaces de passage de message (404) ;
un module de passage de message (308) adapté pour (i) recevoir, pendant l'exécution du premier fil d'exécution, une première opération d'interface de passage de message associée au premier point d'extrémité d'interface de passage de message et (ii) communiquer la première opération d'interface de passage de message du premier fil d'exécution (306a) au premier processus mandataire (312a) ; et
un module de processus mandataire (310) adapté pour :
établir, par le premier processus mandataire (312a), une première instance de la bibliothèque d'interfaces de passage de message (404a) configurée pour s'exécuter dans un mode d'exécution mono-fil ;
utiliser la première instance de la bibliothèque d'interfaces de passage de message (404a) établie par le premier processus mandataire pour exécuter la première opération d'interface de passage de message par le premier processus mandataire.

2. Dispositif informatique selon la revendication 1, dans lequel le module de processus mandataire (310) est adapté pour communiquer par le premier processus mandataire avec un dispositif informatique distant au moyen d'un sous-système de communication du dispositif informatique lors de l'exécution de la première opération d'interface de passage de message, où le module de processus mandataire étant adapté pour communiquer au moyen du sous-système de communication du dispositif informatique comprend ledit module de processus mandataire étant adapté pour communiquer au moyen de ressources réseau du sous-système de communication, où les ressources réseau sont dédiées au premier processus mandataire.

3. Dispositif informatique selon la revendication 1, dans lequel le module de processus hôte étant adapté pour affecter le premier fil d'exécution au premier processus mandataire comprend que ledit module de processus hôte soit adapté pour rattacher le premier fil d'exécution et le premier processus mandataire à un cœur de processeur du dispositif informatique.

4. Dispositif informatique selon la revendication 1, dans lequel le module de passage de message étant adapté pour communiquer la première opération d'interface de passage de message du premier fil d'exécution au premier processus mandataire comprend que ledit module de passage de message soit adapté pour communiquer la première opération d'interface de passage de message en utilisant une région de mémoire partagée du dispositif informatique.

5. Dispositif informatique selon la revendication 1, dans lequel le module de passage de message étant adapté pour recevoir la première opération d'interface de passage de message comprend que ledit module de passage de message soit adapté pour intercepter la première opération d'interface de passage de message ciblée pour une instance partagée de la bibliothèque d'interfaces de passage de message établie par le processus hôte.

6. Procédé de passage de message multifil, le procédé comprenant les étapes suivantes :
créer (502), par un dispositif informatique, un premier point d'extrémité d'interface de passage de message pour un premier fil d'exécution (306a) d'une pluralité de fils d'exécution (306) établis par un processus hôte (304) du dispositif informatique, où le processus hôte (304) comprend une bibliothèque d'interfaces de passage de message (404) ;
affecter (504a, 504b), par le dispositif informatique, le premier fil d'exécution à un premier processus mandataire (312a) ;
recevoir (508a, 508b), par le dispositif informatique lors de l'exécution du premier fil d'exécution (306a), une première opération d'interface de passage de message associée au premier point d'extrémité d'interface de passage de message ;
communiquer (510a, 510b), par le dispositif informatique, la première opération d'interface de passage de message du premier fil d'exécution (306a) au premier processus mandataire (312a) ;
établir, par le premier processus mandataire (312a), une première instance de la bibliothèque d'interfaces de passage de message (404a) configurée pour s'exécuter dans un mode d'exécution mono-fil ; et
utiliser la première instance de la bibliothèque d'interfaces de passage de message (404a) établie par le premier processus mandataire pour exécuter (512a, 512b), par le dispositif informatique, la première opération d'interface de passage de message par le premier processus mandataire.

7. Procédé selon la revendication 6, dans lequel l'exécution de la première opération d'interface de passage de message par le premier processus mandataire comprend de communiquer du premier processus mandataire à un dispositif informatique distant en utilisant un sous-système de communication du dispositif informatique, où la communication utilisant le sous-système de communication du dispositif informatique comprend une communication utilisant les ressources réseau du sous-système de communication, où les ressources réseau sont dédiées au premier processus mandataire.

8. Procédé selon la revendication 6, dans lequel l'affectation du premier fil d'exécution au premier processus mandataire comprend de rattacher le premier fil d'exécution et le premier processus mandataire à un cœur de processeur du dispositif informatique.

9. Procédé selon la revendication 6, dans lequel la communication de la première opération d'interface de passage de message du premier fil d'exécution au premier processus mandataire comprend de communiquer la première opération d'interface de passage de message en utilisant une région de mémoire partagée du dispositif informatique.

10. Procédé selon la revendication 6, dans lequel l'exécution de la première opération d'interface de passage de message comprend l'exécution de la première opération d'interface de passage de message par le premier processus mandataire en utilisant une première instance d'une bibliothèque d'interfaces de passage de message établie par le premier processus mandataire.

11. Procédé selon la revendication 10, dans lequel l'exécution de la première opération d'interface de passage de message par le premier processus mandataire comprend l'exécution de la première opération d'interface de passage de message par le premier processus mandataire en utilisant la première instance de la bibliothèque d'interfaces de passage de message établie dans un mode d'exécution mono-fil.

12. Procédé selon la revendication 10, dans lequel la réception de la première opération d'interface de passage de message comprend l'interception de la première opération d'interface de passage de message ciblée pour une instance partagée de la bibliothèque d'interface de passage de message établie par le processus hôte.

13. Un ou plusieurs supports de stockage lisibles par machine comprenant une pluralité d'instructions y étant stockées qui, en réponse à leur exécution, amènent un dispositif informatique à exécuter le procédé de l'une quelconque des revendications 6 à 12.
